**Europäisches Patentamt**

**European Patent Office**

**Office européen des brevets**

(19)

(11) Veröffentlichungsnummer: **0 299 912 B1**

## (12) EUROPÄISCHE PATENTSCHRIFT

(45) Veröffentlichungstag der Patentschrift:
**15.05.91 Patentblatt 91/20**

(51) Int. Cl.$^5$: **B65G 67/02, B65G 67/20**

(21) Anmeldenummer: **88730160.4**

(22) Anmeldetag: **15.07.88**

(54) **Verladestation für automatische heckseitige Be- und Entladung von Lastkraftwagen oder Anhängern und Containern.**

(30) Priorität: **15.07.87 DE 3723794**

(43) Veröffentlichungstag der Anmeldung:
**18.01.89 Patentblatt 89/03**

(45) Bekanntmachung des Hinweises auf die
Patenterteilung:
**15.05.91 Patentblatt 91/20**

(84) Benannte Vertragsstaaten:
**AT BE CH DE ES FR GB GR IT LI NL SE**

(56) Entgegenhaltungen:
**EP-A- 0 196 269**
**DE-A- 3 151 402**
**DE-A- 3 316 419**
**DE-C- 3 432 312**
**GB-A- 1 575 911**
**GB-A- 2 052 456**

(73) Patentinhaber: **Staege, Rüdiger**
**Gerkrathstrasse 13**
**W-1000 Berlin 38 (DE)**

(72) Erfinder: **Staege, Rüdiger**
**Gerkrathstrasse 13**
**W-1000 Berlin 38 (DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33 (DE)**

**Beschreibung**

Die Erfindung betrifft eine Verladestation für automatische heckseitige Be- und Entladung von Lastkraftwagen oder Anhägern und Containern mit Paletten mittels nach dem Hubgabelprinzip arbeitender fahrerloser Lademaschine, die die Paletten über mindestens eine längs einer Laderampe verfahrbare Plattform transportiert.

Verladestationen dieser und ähnlicher Art sind bekannt aus "Transport und Lager" 7/8/1980 Seiten 46-50, aus den DE-OS 31 32 899, 32 18 756 und 33 16 419 aus der DE-PS 34 32 312, sowie aus der EP-A3-0 196 269.

Ein wesentliches Problem beim heckseitigen Beladen ist das sichere Einbringen der Paletten in den LKW-Innenraum. Es muß dafür gesorgt sein, daß das Überfahrtsniveau für die Lademaschine stimmt und die Paletten mittig in den Laderaum eingeführt werden.

Bei den bekannten Verladestationen ist im allgemeinen vorgesehen, daß eine Überladebrücke zwischen Rampe und LKW den Bewegungen des in die Knie gehenden LKW folgt und ein mittiges "Einfädeln" der Ladung mittels unterschiedlich ausgebildeter mechanischer Einweiser, die dem Lastwagenheck in Form einer Schleuse oder seitenbeweglicher Führungsbleche vorgeordnet sind, erreicht wird. Eine spezielle Lösung, die sich insbesondere für das Be- und Entladen aller genormten Transportbehältnisse mit unebenen Bordwänden, z.B. mit Aussparungen, Rungen o.ä. eignen soll, bietet die durch die DE-PS 34 32 312 bekannte Verladestation, bei der das problemlose Durchfahren der Lademaschine mit den Transporteinheiten gesichert ist sowohl durch einen die Transporteinheiten umfassenden, durch von außen – z.B. infolge Unebenheiten in den Bordwänden – einwirkende Kräfte seitlich verschiebbaren Schutz- und Führungskäfig als auch an den Hubgabeln angebrachte Tragrollen, die ein seitliches Verschieben der auf ihnen stehenden Transporteinheiten – zusammen mit dem sie umfassenden Schutz- und Führungskäfig – erleichtern.

Ausgehend von dem genannten Stand der Technik, zu dem, was den Niveauausgleich zwischen LKW-Ladekante und Überfahrbrücke angeht, noch die DE-PS 35 11 445 zu nennen ist, liegt der Erfindung die Aufgabe zugrunde, eine Verladestation der gattungsgemäßen Art so auszubilden, daß Be- und Entladevorgänge nach dem Andocken des LKW, sei es senkrecht oder schräg zur Laderampe, vollautomatisch und mit vermindertem mechanischen Aufwand für das sogenannte "Einfädeln" der Ladung beim Beladen erfolgen kann.

Diese Aufgabe wird mit den im Kennzeichenteil des Patentanspruchs 1 angegebenen Merkmalen gelöst.

Die weitere Ausbildung des Erfindungsgegenstandes geht aus den Unteransprüchen hervor.

Der erzielte Vorteil ist im wesentlichen darin zu sehen, daß die Lademaschine so ausgerüstet und positionierbar ist, daß besondere mechanische Hilfsmittel zum "Einfädeln" der Transporteinheiten bzw. Paletten in den Laderaum nicht erforderlich sind.

Ein Ausführungsbeispiel mit einer Variante des Gegenstandes der Erfindung ist in der Zeichnung dargestellt und wird nachstehend anhand eines Be- und eines Entladevorganges beschrieben. Es zeigen

Fig. 1 eine perspektivische Teildarstellung einer Verladestation mit sogen. Kopframpe ;

Fig. 2 eine perspektivische Teildarstellung einer Verladestation mit sogen. Zahnrampe ;

Fig. 3 eine perspektivische Ansicht der Lademaschine ;

Fig. 4 eine vergrößerte Detaildarstellung des in den Fig. 1 und 2 mit Bezugszeichen 5a bezeichneten Niederhalters ;

Fig. 5 eine Ansicht auf die Rückseite eines mit Paletten beladenen Lastkraftwagens ;

Fig. 6 eine Ansicht wie Fig. 5, jedoch mit vom Ladefahrzeug angehobenen Paletten ;

Fig. 7 eine vereinfachte Draufsicht auf den Übergangsbereich zwischen LKW-Laderaum und Laderampe.

Fig. 8 eine perspektivische Darstellung einer am Überfahrträger angordneten Stützvorrichtung.

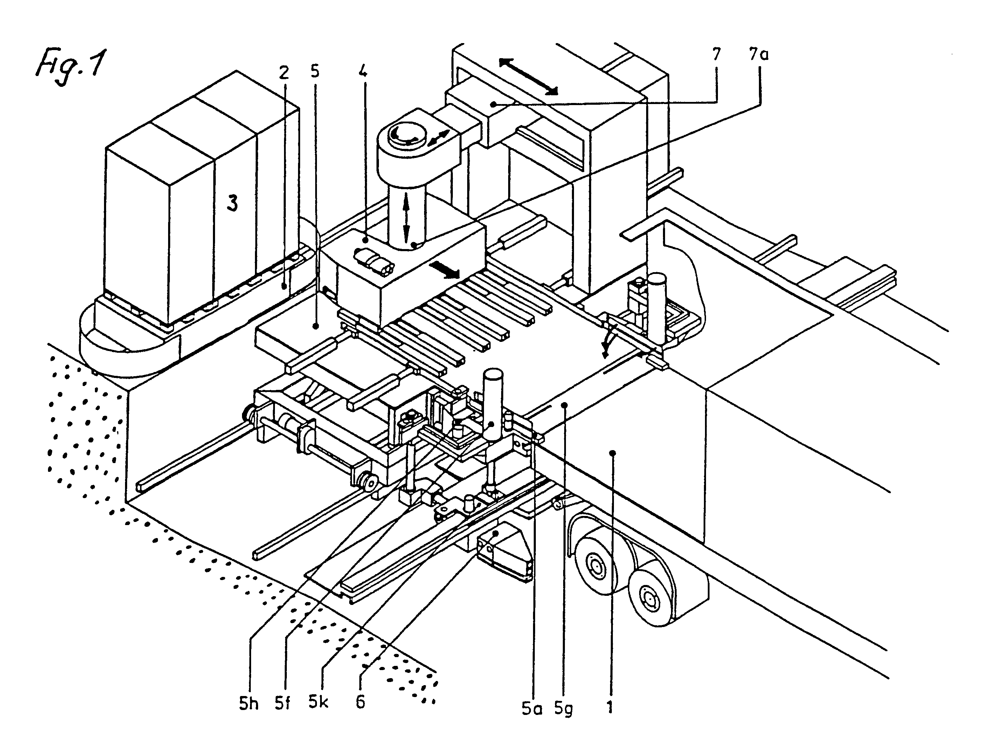

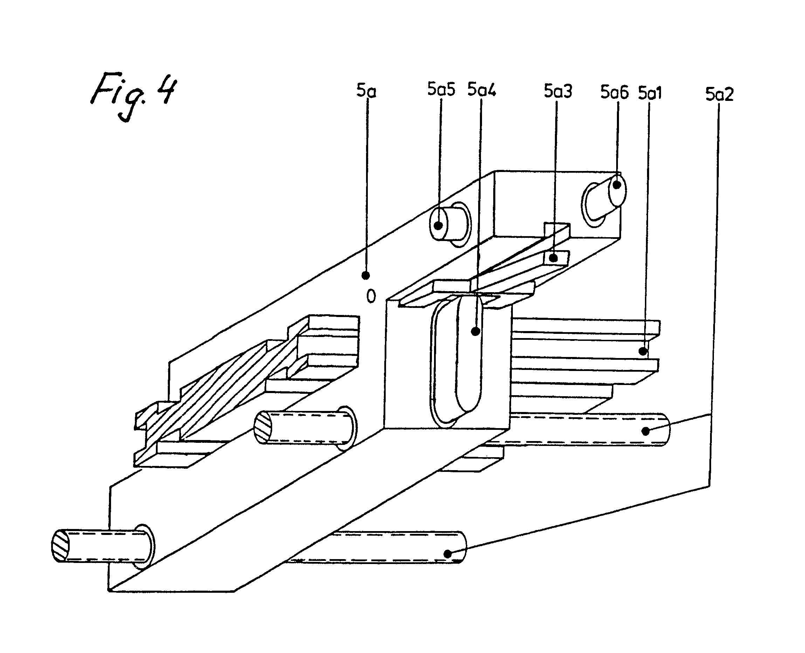

In den nachstehend beschriebenen Fig. 1-8 sind gleiche Teile mit denselben Bezugszeichen versehen. Es wird teilweise auf mehrere Figuren gleichzeitig Bezug genommen.

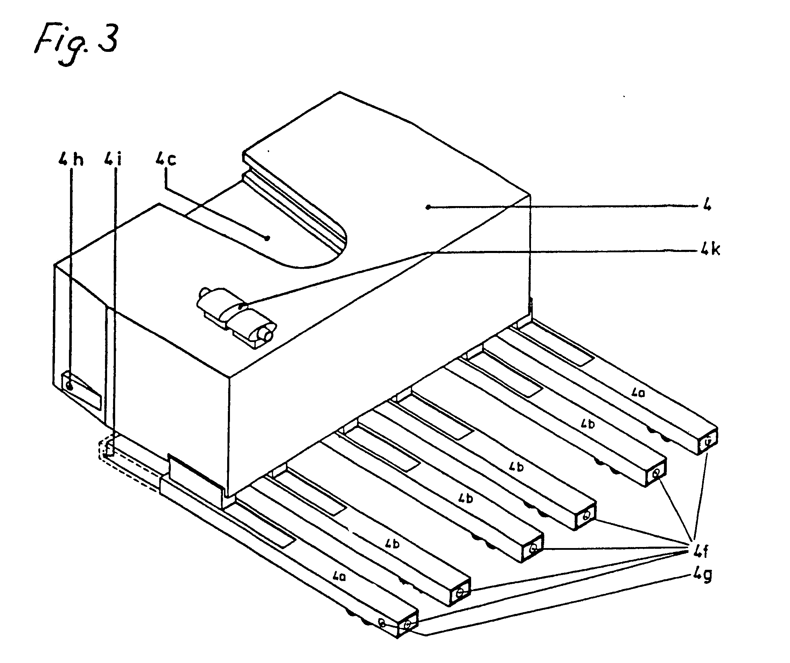

Fig. 1 zeigt einen rückwärts an die Andockstelle 6 gefahrenen LKW, der mittels einer nicht dargestellten Signalanlage seine Position gefunden hat. Der Lademeister oder eine andere verantwortliche Person, gibt einem Steuerungsrechner vor, welche Andockstelle die Ladevorrichtung anzufahren hat und, ob der LKW zu Be- oder zu Entladen ist. Der LKW-Laderaum 1 wird dabei mittels Kamera 4k, die auf der Lademaschine 4 (s. Fig. 3) montiert ist, überwacht.

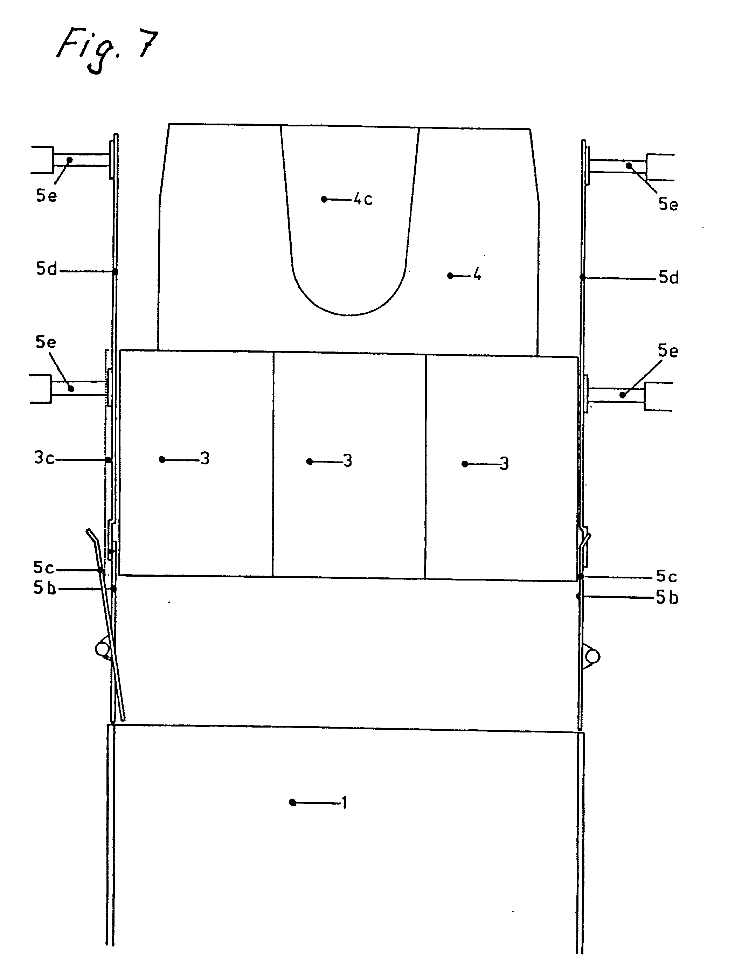

Bei einer sogen. Kopframpe, wie sie die Fig. 1 zeigt, bewegt sich die Ladevorrichtung auf Schienen zur Andockstelle 6 und stoppt mittig zwischen der Signalanlage, die auch für die Position des LKW zuständig ist. Eine Plattform 5 der Ladevorrichtung, die einen Überfahrträger 5g aufweist, fährt in ihre höchste Position, wobei daran angeordnete Niederhalter 5a, die zum belasteten Absenken der Ladefläche des Lastwagens dienen, die innerste Position einnehmen, d.h. in der Mitte des Überfahrträgers. Leitfunktionen ausübende Richtflächen 5b und Kontrollfunktionen ausübende Begrenzungsflächen 5c (s. Fig. 7) sind dabei weggeklappt. Die Plattform 5 fährt langsam nach unten, bis Reflektionslichttaster (nicht dargestellt) im Überfahrträger 5g die Heckkante des LKW's erfassen. Der Überfahrträger 5g wird dann in Richtung LKW-Heckkante bewegt bis Taster 5a4 im Niederhalter 5a betätigt werden. Mit der Plattform 5 wird der Überfahrträger 5g soweit abgesenkt, bis Taster 5a3 im Niederhalter 5a beim Auftreffen auf den LKW-Boden betätigt werden. Die sich mittig befindenden Niederhalter 5a werden nun mittels Gewindespindeln 5a2 synchron auf einer Leit- und Halteschiene 5a1 nach außen gefahren, bis ein Taster 5a5 in wenigstens einem der Niederhalter 5a betätigt wird. Um den Taster im Niederhalter 5a der gegenüberliegenden Seite an der entgegengesetzten LKW-Wand betätigen zu können, fährt die gesamte Ladevorrichtung auf den Schienen in Richtung zur anderen LKW-Wand, wobei der bisher betätigte Taster 5a seine Position an der erreichten LKW-Wand nicht verläßt, d.h. der Taster 5a5 fährt entgegen der Fahrtrichtung der Ladevorrichtung nach außen. Wenn beide Taster 5a5 betätigt sind, stoppt die Ladevorrichtung. Mittels Wegaufnehmer (z.B. ein hier nicht dargestelltes Linearpotentiometer) wird über die Wegstrecke der Niederhalter 5a die lichte Weite der LKW-Ladefläche 1 ermittelt. Durch die gedrückten Taster 5a4 des linken und des rechten Niederhalters 5a wird die Winkelstellung des Überfahrträgers 5g zur Plattform 5 mittels induktiver Wegaufnehmer (nicht dargestellt) ermittelt. Entsprechend zu diesem Winkel und zur gemessenen lichten Weite der LKW-Ladefläche 1 werden Richtflächen 5b/d und Begranzungsflächen 5c mittels einer Verstellvorrichtung 5e in Fahrposition der Lademaschine 4 gebracht.

Währenddessen wird die LKW-Heckkante mittels Hydraulikzylinder 5f, die über die Niederhalter 5a auf die Heckkante einwirken, belastet abgesenkt, wobei eine Vorrichtung mit Widerhalter 5k den erforderlichen Gegenhalt gibt.

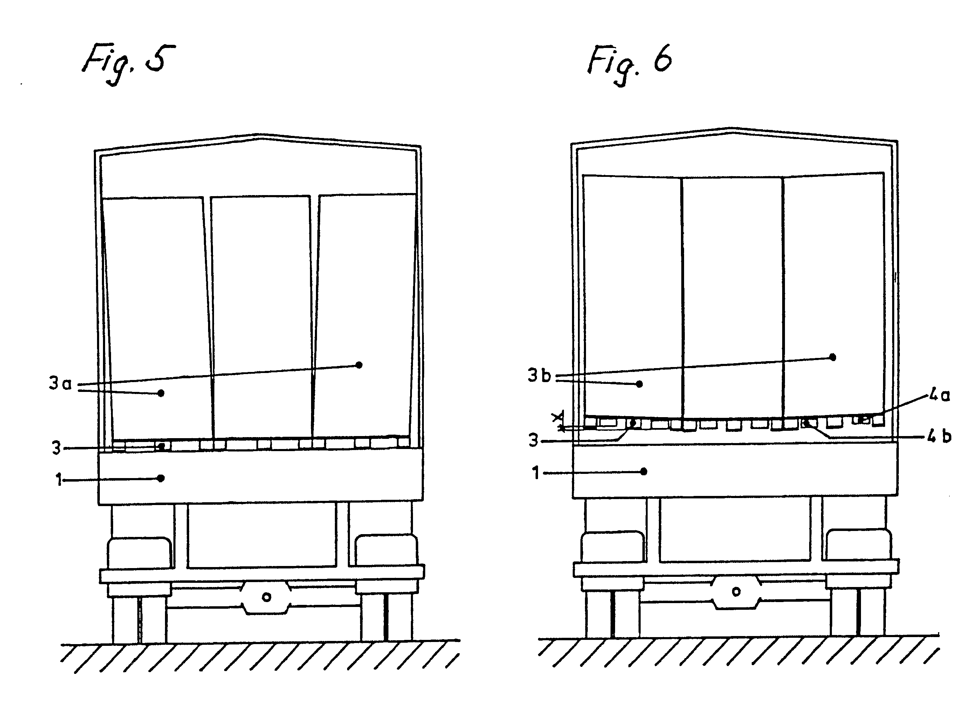

Vor Ausrichtung der Richtflächen 5b/d wird die Lademaschine 4 mittels einer Hub- und Bewegungsvorrichtung 7 angehoben und nach dem Ausrichten mittig zwischen den Richtflächen 5d in Fahrtrichtung zum LKW abgesetzt. Die Lademaschine 4 klinkt sich von einer Klemmkupplung 7a der Vorrichtung 7 aus und fährt, geleitet durch eine Vorrichtung zum berührungslosen Abtasten 4g der LKW-Seitenwände und der Richtflächen 5b/d, in den Laderaum des LKW hinein. Mittels optischer oder mechanischer Einrichtung 4f wird die Stellung der Paletten 3 ermittelt, so daß die Zinken 4a/b der Lademaschinengabel entsprechend ausgerichtet werden können. Die Lademaschine 4 fährt mit den Zinken 4a/b in die Paletten 3 ein und hebt sie so an, daß die äußeren Zinken 4a, die gegenüber dem Niveau der Innenzinken 4b anhebbar sind, gegebenenfalls nicht im Lot stehende Paletten 3a senkrecht ausrichten, so daß sie einen sich gegenseitig stützenden Block bilden (vgl. Fig. 5 und 6). Der Betrag, um den die äußeren Zinken 4a gegenüber dem Niveau der Innenzinken 4b anhebbar sind, ist in Fig. 6 mit dem Bezugszeichen X gekennzeichnet. Beim Anheben der Paletten werden diese zwangsmechanisch leicht gegen die Lademaschine gekippt.

Mit der aufgenommenen Ladung fährt die Lademaschine rückwärts in Richtung der Hub- und Bewegungsvorrichtung 7, wobei sie durch eine Einrichtung 4h/i zum berührungslosen Abtasten der LKW-Seitenwände und der Richtflächen 5b/d (s. Fig. 7) aus dem Laderaum 1 herausgeleitet wird. Die Lademaschine 4 klinkt sich dann in die Klemmkupplung 7a der Hub- und Bewegungsvorrichtung 7 ein, wird über das Niveau der Richtflächen 5b/d angehoben und gewendet. Während des Wendevorganges kann die Lademaschine mittels einer in der Klemmkupplung 7a untergebrachten Kippvorrichtung schräg gehalten werden, um die Kräfte zu kompensieren, die auf die mit der Lademaschine angehobene Ladung einwirken. Im Laufe der oben geschilderten Vorgänge ist auf der Laderampe ein Verbindungsfahrzeug 2, das zwischen Lager und Ladevorrichtung pendelt in Übernahmeposition gebracht worden. Die an der Hub- und Bewegungsvorrichtung 7 hängende Lademaschine wird mit ihrer Last während des Wendens auf ein Übernahmeniveau zum Verbindungsfahrzeug 2 gehoben, wonach dort die Paletten 3 abgesetzt werden. Mittels der Vorrichtung 7 wird die Lademaschine zurückgefahren, bis die Zinken 4a/b die Paletten 3 verlassen haben, wonach die Lademaschine 4 in ihre Ausgangsposition gebracht wird, um zum nächsten Entladevorgang zu starten.

Der Beladevorgang erfolgt nach Arretierung des LKW's und belastetem Absenken seiner Ladefläche entsprechend umgekehrt. Bei eventuell seitlich überstehender Ladung (durch gestrichelte Linie 3c in Fig. 7 angedeutet) wird die Kontrollfunktion ausübende Begrenzungsfläche 5c verstellt, was den Stop der Lademaschine 4 und deren Rückfahrt zur Ausgangsposition mit Meldung zum Lademeister zur Folge hat.

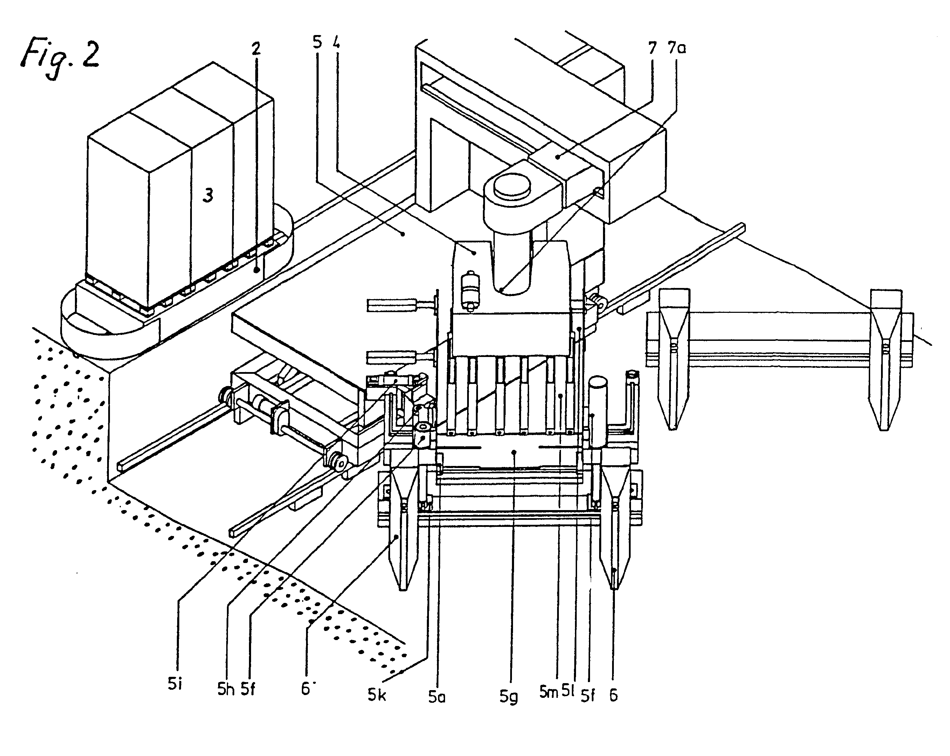

In Fig. 2 ist eine Ausführungsvariante der erfindungsgemäßen Vorrichtung dargestellt. Sie ist für sogen. Zahnrampen vorgesehen.

Wie bei der Verladestation nach Fig. 1 bewegt sich die Ladevorrichtung auf Schienen zur Andockstelle 6 und stoppt dort in einer vorgewählten Position, in der der Überfahrträger 5g durch Schwenken um ein Gelenk 5h mittels Hydraulikzylinder 5i mittig in der Andockstelle 6 positionierbar ist. Ein am waagerechten Teil 51 der Plattform 5 angelenktes Segment 5m, das sich im Ruhezustand in senkrechter Lage befindet, wird nach Abschluß des Andockvorganges heruntergeklappt, so daß es auf dem Überfahrträger zu liegen kommt.

Bei angedocktem LKW (hier nicht dargestellt) verlaufen die Be- bzw. Entladevorgänge wie im Zusammenhang mit Fig. 1 geschildert.

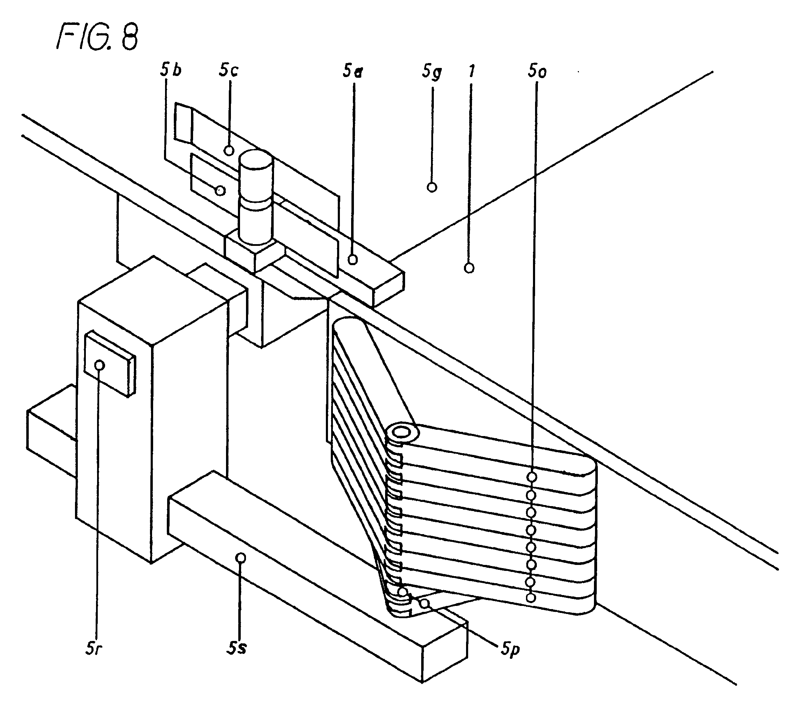

In Fig. 8 ist eine von zwei am Überfahrträger 5g beidseitig angeordneten Stützvorrichtungen dargestellt, die dazu dienen, den zu be- bzw. entladenden Lastkraftwagen seitlich und von unten abzustützen. Die Stützvorrichtung weist lamellenartige Stützelemente 5o, 5p auf, die in der Art eines Scharnieres miteinander verbunden und auf einer vertikalen Achse an einem Stellarm 5s der Stützvorrichtung angeordnet sind. Dieser Stellarm 5s dient der Längsverstellung der Stützelemente. Er ist mittelbar mit einem der Querverstellung dienenden Stellarm 5r verbunden, der am Überfahrträger 5g angeordnet ist.

Bei am Überfahrträger 5g angedockten Lastkraftwagen liegen die Stützelemente 5o der Stützvorrichtung an der Seitenwand des Lastkraftwagens an, während die dort nicht zur Anlage kommenden sich unter die Ladefläche 1 bewegen und dort ihre Stützwirkung von unten ausüben.

## Ansprüche

1. Verladestation für automatische heckseitige Be- und Entladung von Lastkraftwagen oder Anhängern und Containern mit Paletten mittels nach dem Hubgabelprinzip arbeitender fahrerloser Lademaschine, die die Paletten über mindestens eine längs einer Laderampe verfahrbare Plattform transportiert, **dadurch gekennzeichnet**, daß an der Plattform (5) eine mit der Lademaschine (4) Koppelbare, zum Heben, Versetzen und Drehen der Lademaschine (4) dienende Hub- und Bewegungsvorrichtung (7) angeordnet ist,
daß auf der dem zu beladenden Fahrzeug (1) bzw. Container zugewendeten Seite der Plattform (5) ein Überfahrträger (5g) vorgesehen ist, der an die Ladekante des Fahrzeugs bzw. Containers anstellbar und in an sich bekannter Weise mit Mitteln zum belasteten Absenken der Ladefläche des Lastkraftwagens bzw. Anhängers versehen ist, und
daß die äußeren Zinken (4a) der Lademaschine (4) über das Niveau ihrer Innenzinken (4b) anhebbar sind.

2. Verladestation nach Anspruch 1, **dadurch gekennzeichnet**, daß die Hub- und Bewegungsvorrichtung (7) eine zur Aufnahme der Lademaschine (4) ausgebildete Klemmkupplung (7a) aufweist.

3. Verladestation nach Anspruch 2, **dadurch gekennzeichnet**, daß die Klemmkupplung (7a) mit einer Kippvorrichtung ausgerüstet ist, die beim Drehen der Lademaschine auf die Ladung einwirkende Fliehkräfte kompensiert.

4. Verladestation nach einem der vorstehenden Ansprüche, **dadurch gekennzeichnet**, daß der Überfahrträger (5g) um ein seitliches Gelenk (5h) in horizontaler Ebene schwenkbar ist, und daß an der Plattform (5) ein Segment (5m) angelenkt ist, mittels dessen die beim Verschwenken des Überfahrträgers (5g) entstehende Lücke zur Plattform (5) überbrückbar ist.

5. Verladestation nach einem der vorstehenden Ansprüche, **dadurch gekennzeichnet**, daß als Mittel zum belasteten Absenken der Ladefläche des LKW's bzw. Anhängers an dem Überfahrträger (5g) Niederhalter (5a) angeordnet sind, die unter mittelbarer Einwirkung von in Niederhaltern (5k) gehaltenen Hydraulikzylindern (5f) auf die Heckladekante des LKW mit vorwählbarer Vorlast drücken.

6. Verladestation nach einem der vorstehenden Ansprüche, **dadurch gekennzeichnet**, daß die Zinken (4a, 4b) der Gabel der Lademaschine um einen Teilbetrag ihrer Länge aus- und einfahrbar sind.

7. Verladestation nach Anspruch 6, **dadurch gekennzeichnet**, daß die Stirnenden der Zinken (4a, 4b) mit Sensoren (4f) zur Erfassung des Palettenstandortes bzw. der Palettteneinfahröffnungen versehen sind.

8. Verladestation nach den Ansprüchen 6 und 7, **dadurch gekennzeichnet**, daß die Außenseiten der äußeren Zinken (4a) mit je einem Sensor (4g) zur berührungslosen Abtastung der LKW-Seitenwände bzw. der Leitfunktion ausübenden Vorrichtungsteile der Ladevorrichtung ausgerüstet sind.

9. Verladestation nach einem der vorstehenden Ansprüche, **dadurch gekennzeichnet**, daß die Lademaschine (4) auf beiden Seitenflächen Sensoren (4h) zur berührungslosen Abtastung der LKW-Seitenwände bzw. der Leitfunktion ausübenden Vorrichtungsteile der Ladevorrichtung aufweist.

10. Verladestation nach einem der vorstehenden Ansprüche, **dadurch gekennzeichnet**, daß die Lademaschine (4) mit in Vorwärts- und Rückwärtsfahrtrichtung blickenden elektronischen Kameras (4k) ausgestattet ist.

11. Verladestation nach einem der vorstehenden Ansprüche, **dadurch gekennzeichnet**, daß am Überfahrträger (5g) beidseitig je eine in Längs- und Querrichtung verstellbare, den zu be- oder entladenden Lastkraftwagen, Anhänger oder Container seitlich und von unten abstützende Stützvorrichtung (5o, 5p, 5r, 5s) vorgesehen ist.

12. Verladestation nach Anspruch 11, **dadurch gekennzeichnet**, daß die Stützvorrichtung in der Art eines Scharnieres miteinander verbundene lamellenartige Stützelemente (5o, 5p) aufweist, die auf einer vertikalen Achse an einem Stellarm (5s) der Stützvorrichtung angeordnet ist.

13. Verladestation nach einem der vorstehenden Ansprüche, **dadurch gekennzeichnet**, daß für den automatischen Betrieb der Station an sich bekannte elektronische Steuerungsmittel vorgesehen sind.

## Claims

1. Loading station for the automatic rear-end loading and unloading of lorries or trailers and containers with pallets by means of a driverless loading machine operating according to the fork-lift principle, transporting the pallets over at least one platform which can travel along a loading ramp, characterised in that a lifting and moving device (7) which can be coupled to the loading machine (4) and serves to lift, move and turn the loading machine (4) is arranged on the platform (5), that a transfer support (5g) is provided on the side of the platform (5) facing the vehicle (1) or container to be loaded, wherein said transfer support can be placed at the loading edge of the vehicle or container and is provided in the manner known per se with means for lowering under load the loading surface of the lorry or trailer, and that the outer prongs (4a) of the loading machine (4) can be raised above the level of its inner prongs (4b).

2. Loading station according to claim 1, characterised in that the lifting and moving device (7) has a clamp coupling (7a) adapted to receive the loading machine (4).

3. Loading station according to claim 2, characterised in that the clamp coupling (7a) is provided with a tipping device which compensates for the centrifugal forces acting on the load as the loading machine is turned.

4. Loading station according to one of the preceding claims, characterised in that the transfer support (5g) can be pivoted about a lateral hinge (5h) in the horizontal plane, and that a segment (5m) is hinged on to the platform (5) in order to bridge the gap to the platform (5) produced when the transfer support (5g) is swivelled.

5. Loading station according to one of the preceding claims, characterised in that retaining devices (5a) are arranged on the transfer support (5g) as means for lowering under load the loading surface of the lorry or trailer, said means, under the indirect influence of hydraulic cylinders (5f) held in retaining devices (5k), applying a pre-selectable initial load to the rear loading edge of the lorry.

6. Loading station according to one of the preceding claims, characterised in that the prongs (4a, 4b) of the fork of the loading machine can be extended and retracted by part of their length.

7. Loading station according to claim 6, characterised in that the front ends of the prongs (4a, 4b) are provided with sensors (4f) for detecting the position of the pallets or the pallet fork entry,

8. Loading station according to claims 6 and 7, characterised in that the outer faces of the outer prongs (4a) are each provided with a sensor (4g) for non-contact scanning of the side walls of the lorry or those components of the loading device performing a guiding function.

9. Loading station according to one of the preceding claims, characterised in that the loading machine (4) has sensors (4h) on both side faces for non-contact scanning of the side walls of the lorry or those components of the loading device performing a guiding function.

10. Loading station according to one of the preceding claims, characterised in that the loading machine (4) is provided with an electronic camera (4k) looking in the forward and reverse directions.

11. Loading station according to one of the preceding claims, characterised in that a supporting device (5o, 5p, 5r, 5s) adjustable in the longitudinal and transverse directions and supporting the lorry, trailer or container to be loaded or unloaded at the sides and from below is provided at either side of the transfer support (5g).

12. Loading station according to claim 11, characterised in that the supporting device has laminated supporting elements (5o, 5p) hinged together and arranged along a vertical axis on a control arm (5s) of the supporting device.

13. Loading station according to one of the preceding claims, characterised in that electronic control means known per se are provided for automatic operation of the station.

## Revendications

1. Poste de transbordement pour le chargement et le déchargement automatiques par l'arrière de camions ou remorques et conteneurs par des palettes, au moyen d'une machine de chargement sans conducteur travaillant selon le principe de la fourche de levage, machine qui transporte les palettes au-dessus d'au moins une plate-forme mobile le long d'une rampe de chargement,
caractérisé en ce que, sur la plate-forme (5), est agencé un dispositif de déplacement et de levage (7) qui peut être couplé à la machine de chargement (4) et qui sert à soulever, déplacer et tourner la machine de chargement (4), en ce que, du côté de la plate-forme (5) proche du véhicule (1) ou du conteneur à charger, est prévu un support de chargement (5g) qui peut être amené contre le bord de chargement du véhicule ou du conteneur et est muni, de façon connue en soi, de moyens pour l'abaissement sous une charge de la surface de chargement du camion ou de la remorque, et en ce que les fourchons externes (4a) de la machine de chargement (4) peuvent être soulevés au-dessus du niveau de ses fourchons internes (4b).

2. Poste de transbordement selon la revendication 1,
caractérisé en ce que le dispositif de déplacement et de levage (7) comporte un accouplement à serrage (7a) adapté pour recevoir la machine de chargement (4).

3. Poste de transbordement selon la revendication 2,
caractérisé en ce que l'accouplement à serrage (7a) est équipé d'un dispositif de basculement qui, lors de la rotation de la machine de chargement, compense les forces centrifuges agissant sur la cargaison.

4. Poste de transbordement selon une des revendications précédentes,

caractérisé en ce que le support de chargement (5g) peut pivoter, autour d'une articulation latérale (5h), dans le plan horizontal, et en ce que, à la plate-forme (5), est articulé un segment (5m), au moyen duquel le vide créé par le pivotement du support de chargement (5g) par rapport à la plate-forme (5) peut être ponté.

5. Poste de transbordement selon une des revendications précédentes,

caractérisé en ce que, en tant que moyens pour l'abaissement sous une charge de la surface de chargement du camion ou de la remorque, des presse-tôles (5a) sont agencés sur le support de chargement (5g), lesquels pressent, avec une précharge préchoisie, sur le bord de chargement arrière du camion sous l'action indirecte de vérins hydrauliques (5f) maintenus dans des presse-tôles (5k).

6. Poste de transbordement selon une des revendications précédentes,

caractérisé en ce que les fourchons (4a, 4b) de la fourche de la machine de chargement sont déployables et rétractables sur une partie de leur longueur.

7. Poste de transbordement selon la revendication 6,

caractérisé en ce que les extrémités frontales des fourchons (4a, 4b) sont munies de capteurs (4f) pour détecter l'emplacement des palettes ou les ouvertures des palettes.

8. Poste de transbordement selon les revendications 6 et 7,

caractérisé en ce que les faces externes des fourchons externes (4a) sont équipées, à chaque fois, d'un capteur (4g) pour l'exploration sans contact des parois latérales du camion ou des parties du dispositif de chargement exerçant la fonction de guidage.

9. Poste de transbordement selon une des revendications précédentes,

caractérisé en ce que la machine de chargement (4) présente, sur ses deux faces latérales, des capteurs (4h) pour l'exploration sans contact des parois latérales du camion ou des parties du dispositif de chargement exerçant la fonction de guidage.

10. Poste de transbordement selon une des revendications précédentes,

caractérisé en ce que la machine de chargement (4) est équipée de caméras électroniques (4k) observant dans les directions de marche avant et arrière.

11. Poste de transbordement selon une des revendications précédentes,

caractérisé en ce que, de chaque côté du support de chargement (5g), est prévu un dispositif d'appui (5o, 5p, 5r, 5s) réglable en direction longitudinale et en direction transversale, supportant, latéralement et du bas, le camion, la remorque ou le conteneur à charger ou décharger.

12. Poste de transbordement selon la revendication 11,

caractérisé en ce que le dispositif d'appui comporte des éléments d'appui (5o, 5p) en forme de lames, reliés les uns aux autres sous forme d'une charnière, qui sont agencés sur un axe vertical sur un bras de réglage (5s) du dispositif d'appui.

13. Poste de transbordement selon une des revendications précédentes,

caractérisé en ce que, pour le fonctionnement automatique du poste, des moyens de commande électroniques, connus en soi, sont prévus.

Fig.1

Fig. 2

Fig. 3

EP 0 299 912 B1

Fig. 4

5a  5a5  5a4  5a3  5a6  5a1  5a2

0

EP 0 299 912 B1

*Fig. 5*

*Fig. 6*

EP 0 299 912 B1

# Fig. 7

FIG. 8

EP 0 299 912 B1